# EUROPEAN PATENT APPLICATION

(11) **EP 0 686 953 A1**
(43) Date of publication of application: **13.12.1995**
(21) Application number: 95303915.3
(22) Date of filing: 07.06.1995
(51) Int. Cl.: G09G 3/14

(54) **LED indicator with low operating voltage and high over-voltage tolerance**

(30) Priority: 07.06.1994 US 255142
(71) Applicant: HONEYWELL INC., Minneapolis Minnesota 55408 (US)
(72) Inventor: Zuehlke, Kurt G., Minnetonka, Minnesota 55345 (US)
(74) Representative: Fox-Male, Nicholas Vincent Humbert

(57) **Abstract**

An LED indicator circuit has first and second input nodes, the first input node being electrically connected to the first terminal of a positive temperature coefficient resistor (PTC). The second terminal of the PTC is electrically connected to the cathode of a first diode, the anode of the first diode being electrically connected to the second input node. A series of diodes are electrically connected anode to cathode in parallel with said first diode. The anode of the first in the series of diodes is electrically connected to the second terminal of the PTC while the cathode of the last in the series of diodes is electrically connected to the second input node. Further, connected in parallel with the first diode and the series of diodes is an LED indicator having its anode electrically connected to the second terminal of the PTC and the cathode electrically connected to the second input node. The LED indicator circuit is capable of withstanding mis-wirings in which high voltages of greater than 50 volts DC can be applied to the circuit without damaging the circuit, while during normal operation, the LED will operate properly between 0 and 2.5 volts DC with negligible effect from the protection circuit.

## Description

### BACKGROUND OF THE INVENTION

This invention relates to LED visual indicator circuits. Specifically, it relates to Light-Emanating Diode (LED) circuits used as visual indicators. Specifically, it relates to LED indicator circuits capable of operation from less than 2.5 volts DC to greater than 50 volts DC with protection against applied reverse polarity and applied AC voltages.

The typical LED circuit used as a visual indicator may have required voltage and current limiting circuitry located remotely from the LED indicator. This arrangement puts the LED at risk of damage if the connection nodes for the LED are in the vicinity of higher voltage (i.e. 24 volts AC) terminals, as errors in wiring may inadvertently connect the higher voltage to the LED, causing it to be damaged. As the sophistication of systems increases, for example, heating, ventilating, and air conditioning (HVAC) systems, to operate the systems effectively, the operator requires more and more feedback. One method of giving the operator feedback is to install LED indicators. When these indicators are utilized to indicate events at remote locations, it is possible, when installing the systems, that the systems will be wired incorrectly. As today's market attempts to foresee mis-wirings which could damage the unit or possibly harm the operator, designers are constantly looking for ways to avoid potential problems.

The indicator circuit disclosed herein provides a circuit in which an incorrect installation, which would normally damage a normal LED indicator circuit, will not damage the disclosed indicator circuit.

### SUMMARY OF THE INVENTION

The present invention provides an LED indicator circuit characterised by: a first input node and a second input node to be electrically connected to an external source; a positive temperature coefficient resistor having a first and a second terminal, said first terminal of said positive temperature coefficient resistor electrically connected to one input node; a first diode having an anode and a cathode, said first diode electrically connected to said second terminal of said positive temperature coefficient resistor and to the other input node; a second diode electrically connected in series to at least one diode being a last diode, said second and said at least one diodes being electrically connected anode to cathode in series, said anode of said second diode being electrically connected to said cathode of said first diode, said cathode of said last diode being electrically connected to said anode of said first diode; and a light emanating diode having an anode and a cathode, said anode of said light emanating diode being electrically connected to said cathode of said first diode, said cathode of said light emanating diode electrically connected to said anode of said first diode.

Thus, an object of this invention may be to provide an indicator circuit which is capable of surviving mis-wirings which could generate voltages across the input nodes greater than 50 volts DC. Further, this invention can provide an LED indicator circuit which is capable of surviving a 50-volt RMS AC signal being applied to it. Further, this invention can provide an LED indicator circuit which is designed to operate normally with 2.5 volts DC or less provided across its input nodes.

The invention may comprise an LED circuit having two input nodes. Connected to the first input node is a positive temperature coefficient resistor (PTC). The second terminal of the PTC is connected to the cathode of a first diode. The anode of the first diode is electrically connected to the second input node. Connected in parallel with the first diode is a series of four diodes with the anode of the first of the series of diodes connected to the cathode of the first diode and the anode of the fourth of the series of diodes electrically connected to the anode of the first diode. Further connected in parallel to the first diode is an LED, wherein the anode of the LED is electrically connected to the cathode of the first diode. The circuit operation utilizes the characteristics of the PTC to prevent over-voltages from damaging the LED or the first diode or the series of diodes.

The voltage-current characteristic curve of the PTC thermistor makes it an ideal candidate as a short circuit or over-current protective device. During normal operating conditions, the PTC remains in a low resistance state, resulting in negligible attenuation to current flow. When a short circuit or over-current condition occurs, the PTC will switch to a high resistance state, thereby limiting the current flow in the circuit to a point well below the normal operating level. When the fault condition is removed, the PTC returns to its low resistance state, allowing the current flow to recover to its normal level.

By implementing a PTC and protection diodes, the LED can be protected from over-currents. A normal diode operates during its forward bias stage with a voltage drop from the anode to the cathode of approximately .7 volts DC. However, when a reverse voltage is applied to the diode, no current flows and the diode behaves as an open circuit. This occurs until a breakdown voltage is achieved, at which time a reverse current flows through the diode. An LED can only handle a limited forward current and will be damaged by a high forward current. The LED will also be damaged by a high reverse voltage. An object of this invention is to protect the LED from excessive forward currents and excessive reverse voltages.

### BRIEF DESCRIPTION OF THE DRAWING

Fig. 1 illustrates a prior art LED indicator circuit.

Fig. 2 is the schematic diagram of the preferred embodiment.

### DESCRIPTION OF THE PREFERRED EMBODIMENT

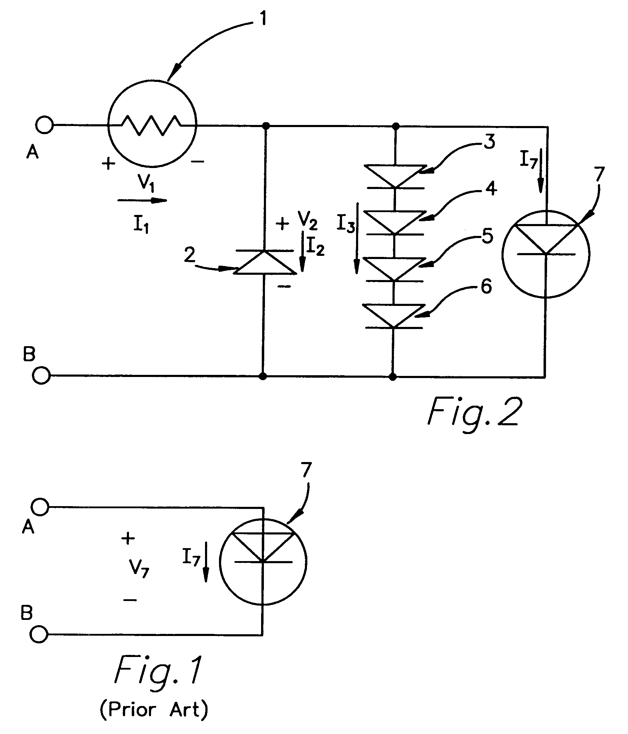

LED indicator circuits, as illustrated in Fig. 1, operate by having a first node A and a second node B, which are electrically connected to an external source which provides an input signal. Generally, the input signal consists of a voltage between 0 and 2.5 volts DC. Under normal operation, LED 7 is never exposed to more than 2.5 volts DC and is not exposed to a reverse voltage. Therefore, the LED is not placed in the reverse bias region or the breakdown region. Therefore, under normal circumstances, the design of the indicator circuit does not require safety features such as those illustrated in the preferred embodiment.

Fig. 2 illustrates the preferred embodiment of the invention which incorporates PTC 1, which is utilized as a current limiter. The first terminal of PTC 1 is electrically connected to node A and the second terminal of PTC 1 is electrically connected to the cathode of diode 2. The cathode of diode 2 is also electrically connected to the anode of diode 3 and the anode of LED 7. The anode of diode 2 is electrically connected to node B and the cathode of diode 6 and the cathode of LED 7. The cathode of diode 3 is electrically connected to the anode of diode 4. The cathode of diode 4 is electrically connected to the anode of diode 5 and the cathode of diode 5 is electrically connected to the anode of diode 6.

Diode 2 clamps the applied reverse voltage at the LED to approximately .7 volts, which is well within LED 7's safe operating range. Diodes 3-6 clamp any applied forward voltage to approximately 2.8 volts which is low enough to prevent damage to LED 7. PTC 1 is a resistor with an extremely high positive temperature coefficient which, under normal operating conditions, is in a low resistance state; therefore, very low power losses are caused. However, under operating conditions, where the input voltage across nodes A and B is high enough to cause the previously described diodes to clamp excess voltage, higher than normal current flows, which causes a self-heating of PTC 1, wherein its resistance increases, limiting the current through the circuit to a safe level.

In the prior art method illustrated in Fig. 1, the power source and any limiting resistors are located in the heating unit and LED 7 was connected across bare screw terminals. Because the indicator circuit, which is utilized to indicate a properly functioning unit, was electrically connected to bare screw terminals, and these bare screw terminals were electrically connected to, as an example, a heating unit, the possibility of mis-wiring existed. The preferred embodiment prevents this mis-wiring from damaging the LED indicator circuit.

As stated before, during normal operations, PTC 1 has a negligible resistance and, therefore, does not affect the operation of LED 7. However, if a voltage of 50 volts DC were to occur across nodes A and B, with the positive voltage being located at node A, PTC 1, utilizing its self-heating, would increase its resistance to approximately 1,500 ohms, thereby causing a voltage drop across it of approximately 47.2 volts with a voltage drop at V₂ of approximately 2.8 volts. Current I₂ would be approximately 0 amps, current I₃ would be approximately .03 amps and current I₇ would be high enough to light LED 7. As the majority of the current would flow through D3-D6, LED 7 would not be damaged. Further, because PTC 1 increases in resistance at a rapid rate, diodes D3-D6 are also not damaged. Due to this rapid increase in resistance, and the manner in which PTC 1 limits the current, the circuit will operate under this condition until the problem is corrected with no damage being done to the circuit. However, LED 7 will glow brighter under this condition.

Under a second scenario, a 50 volt DC voltage could be applied to nodes A and B, wherein node B is the positive terminal. In this situation, a .7-volt drop would occur across diode 2. It would approximately equal .03 amps and would flow through D1 from node B to PTC 1. In this situation, I₃ and I₇ would equal approximately 0 amps. Again, PTC 1 would increase in ohms to approximately 1,500 ohms, thereby having a voltage drop of 49.3 volts across PTC 1.

In the event that an AC signal were connected across nodes A and B, the circuit would simply alternate between the first and second scenario. However PTC 1 would still increase in resistance large enough to prevent damage to the circuit.

## Claims

1. An LED indicator circuit characterised by:
a first input node and a second input node to be electrically connected to an external source;
a positive temperature coefficient resistor having a first and a second terminal, said first terminal of said positive temperature coefficient resistor electrically connected to one input node;
a first diode having an anode and a cathode, said first diode electrically connected to said second terminal of said positive temperature coefficient resistor and to the other input node;
a second diode electrically connected in series to at least one diode being a last diode, said second and said at least one diodes being electrically connected anode to cathode in series, said anode of said second diode being electrically connected to said cathode of said first diode, said cathode of said last diode being electrically connected to said anode of said first diode; and
a light emanating diode having an anode and a cathode, said anode of said light emanating diode being electrically connected to said cathode of said first diode, said cathode of said light emanating diode electrically connected to said anode of said first diode.

2. A circuit according to Claim characterised in that said first terminal of said positive temperature coefficient resistor is electrically connected to said first input node, said cathode of said first diode is electrically connected to said second terminal of said positive temperature coefficient resistor and said anode of said first diode is electrically connected to said second input node.

3. A circuit according to Claim 1 characterised in that said first terminal of said positive temperature coefficient resistor is electrically connected to said second input node, said anode of said first diode is electrically connected to said second terminal of said positive temperature coefficient resistor and said cathode of said first diode is electrically connected to said first input node.

4. A circuit according to any preceding Claim characterised in that said second diode is electrically connected in series with four diodes.
